# EUROPÄISCHE PATENTANMELDUNG

(11) **EP 0 688 928 A1**
(43) Veröffentlichungstag der Anmeldung: **27.12.1995**
(21) Anmeldenummer: 95108703.0
(22) Anmeldetag: 07.06.1995
(51) Int. Cl.: E05B 49/00, B60R 25/04

(54) **Schliesssystem mit einem Schlüsselmodul**

(30) Priorität: 24.06.1994 DE 4422081
(71) Anmelder: TEMIC TELEFUNKEN microelectronic GmbH, D-74072 Heilbronn (DE)
(72) Erfinder: Hettich, Gerhard, Dr., D-90599 Dietenhofen (DE); Kuhn, Mathias, D-90542 Eckental (DE); Doerfler, Reiner, Dr., D-90403 Nürnberg (DE)
(74) Vertreter: Maute, Hans-Jürgen, Dipl.-Ing.

(57) **Zusammenfassung**

Es wird ein Schließsystem mit einem Schlüsselmodul (1) und einem Schloßmodul (2) beschrieben. Das Schlüsselmodul weist eine erste Steuereinheit (13) und eine erste um den Schlüsselbart des Schlüsselmoduls gewickelte Induktionsspule (10) auf, die zusammen mit einer zweiten am Schließzylinder des Schloßmoduls angeordneten und mit einer zweiten Steuereinheit (21) verbundenen Induktionsspule (20) ein Übertragungssystem bilden. Das Übertragungssystem dient zur Daten- und Energieübertragung zwischen dem Schlüsselmodul und dem Schloßmodul. Während der Betätigung des Schließsystems wird eine in der ersten Steuereinheit gespeicherte Identifikationsnummer zur zweiten Steuereinheit übertragen. Letztere registriert diese Identifikationsnummer und steuert entsprechend der Zugangsberechtigung oder Zugriffsberechtigung weitere Schaltungsteile an. Das Schließsystem eignet sich für den Einsatz in Kraftfahrzeugen zur Bedienung von Zündschlössern und Wegfahrsperren.

## Beschreibung

Die Erfindung betrifft ein Schließsystem nach dem Oberbegriff des Anspruchs 1. Derartige Schließsysteme, mit denen Daten und Energie zwischen einem Schlüsselmodul und einem Schloßmodul übertragen werden, werden Üblicherweise in Kraftfahrzeugen zur Bedienung von Zündschlössern und Wegfahrsperren eingesetzt. Die Daten- und Energieübertragung zwischen dem Schlüsselmodul und dem Schloßmodul erfolgt hierbei über einen in das Schlüsselgehäuse des Schlüsselmoduls eingebauten Transponder. Der Transponder umfaßt eine als Luftspule ausgebildete Induktionsspule und eine als Chipbauteil ausgeführte Signalaufbereitungsschaltung, die beide miteinander verbunden und in einem Glasröhrchen oder in einem Kunststoffkörper vergossen sind. Bedingt durch seine Größe ist der Transponder nur in den hinteren Teil des Schlüsselgehäuses integrierbar. Die Induktionsspule des Schlüsselmoduls und die Induktionsspule des Schloßmoduls sind somit über die Luft nur lose miteinander magnetisch gekoppelt. Aufgrund dieser schwachen magnetischen Kopplung weist das Schließsystem einen schlechten Wirkungsgrad der Energieübertragung, eine hohe Störempfindlichkeit und somit ein ungünstiges Signal-Rausch-Verhältnis der Datenübertragung auf. Infolgedessen sind bei einem derartigen Schließsystem zusätzliche Schaltungsteile zur Signalverstärkung und Filterung erforderlich - dies ist jedoch mit hohen Kosten und hohem Platzbedarf verbunden.

Der Erfindung liegt die Aufgabe zugrunde, ein Schließsystem gemäß des Oberbegriffs des Anspruchs 1 anzugeben, das einen einfachen Aufbau aufweist, wenig Platz beansprucht, kostengünstig ist und eine störfeste Energie- und Datenübertragung ermöglicht. Diese Aufgabe wird erfindungsgemäß durch die Merkmale im Kennzeichen des Patentanspruchs 1 gelöst. Vorteilhafte Ausgestaltungen und Weiterbildungen ergeben sich aus den Unteransprüchen.

Die erste Induktionsspule des erfindungsgemäßen Schließsystems ist um den Schlüsselbart des Schlüsselmoduls gewickelt; die zweite Induktionsspule ist am Schloßmodul derart angeordnet, daß die beiden Induktionsspulen beim im Schloßmodul steckenden Schlüsselmodul ineinander oder nebeneinander liegen. Der Schlüsselbart dient hierbei als ein magnetisches Flußleitstück der beiden vorzugsweise etwa gleichgroß ausgebildeten Induktionsspulen. Auf diese Weise erhält man eine starke magnetische Kopplung zwischen den beiden Induktionsspulen.

Die beiden Steuereinheiten steuern und überwachen die Daten- und Energieübertragung zwischen dem Schlüsselmodul und dem Schloßmodul. In der ersten Steuereinheit ist vorzugsweise eine elektronische Identifikationsnummer gespeichert, die bei der Bedienung des Schließsystems zur zweiten Steuereinheit übertragen wird. Letztere kontrolliert anhand der Identifikationsnummer ob für das Schlüsselmodul eine Zugriffsberechtigung zum Schloßmodul vorhanden ist und steuert dementsprechend weitere Schaltungsteile an.

Aufgrund der starken magnetischen Kopplung zwischen den beiden Induktionsspulen weist das erfindungsgemäße Schließsystem eine geringe Störempfindlichkeit, ein hohes Signal-Rausch-Verhältnis bei der Datenübertragung und einen hohen Wirkungsgrad der Energieübertragung auf. Da keine zusätzliche Schaltungsteile zur Signalverstärkung und Signalfilterung benötigt werden, kann das Schließsystem mit geringem Schaltungsaufwand und aufgrund des sich daraus ergebenden geringen Platzbedarfs kostengünstig hergestellt werden. Wegen des geringen Platzbedarfs der ersten Steuereinheit besitzt das Schlüsselgehäuse des Schlüsselmoduls außerdem ein handliches Format.

Das Schließsystem läßt sich überall dort einsetzen, wo neben einem mechanischen Schloß der Einsatz einer zusätzlichen elektronischen Sicherung oder eines elektronischen Identifikationssystems zur Zugangsberechtigungs- oder Zugriffsberechtigungskontrolle erforderlich oder empfehlenswert ist.

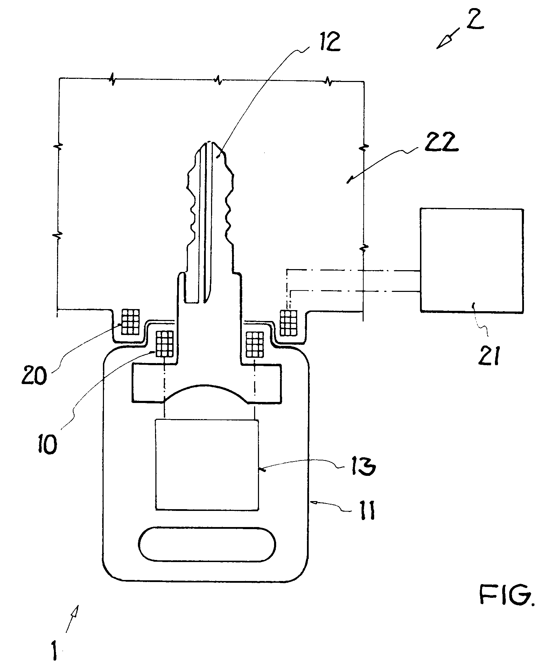

Anhand der Figur, die ein Anwendungsbeispiel aus dem Kraftfahrzeugbereich zeigt, wird die Erfindung im folgenden näher beschrieben. Sie zeigt ein Schließsystem zur Bedienung einer Wegfahrsperre und eines Zündschlosses eines Kraftfahrzeuges. Das Schlüsselmodul 1 ist als mechanischer Schlüssel mit einem Schlüsselbart 12 und mit einem Schlüsselgehäuse 11 ausgebildet. Im Schlüsselgehäuse 11 befinden sich die erste Induktionsspule 10 und die erste Steuereinheit 13. Die erste Induktionsspule 10 ist um den Schlüsselbart 12, der als magnetisches Flußleitstück dient, gewickelt und an die erste Steuereinheit 13 angeschlossen. Das Schloßmodul 2 ist als Zündschloß des Kraftfahrzeuges ausgebildet. Es weist eine um den Schließzylinder 22 gewickelte zweite Induktionsspule 20 und eine mit dieser verbundene zweite Steuereinheit 21 auf. Die erste Induktionsspule 10 und die zweite Induktionsspule 20 liegen bei im Schloßmodul 2 steckendem Schlüsselmodul 1 in unmittelbarer Nähe zueinander; d. h. die eine Induktionsspule liegt im Inneren oder neben der anderen Induktionsspule. Die beiden Induktionsspulen 10 und 20 und die beiden Steuereinheiten 13 und 21 bilden ein Übertragungssystem zur Daten- und Energieübertragung zwischen dem Schlüsselmodul 1 und dem Schloßmodul 2. Die Übertragung erfolgt hierbei induktiv über die beiden Induktionsspulen 10 und 20. Der Schlüsselbart 13 dient zur Bedienung des Schließzylinders 22, das Übertragungssystem zur elektronischen Identifikation des Schlüsselmoduls 1. Die Steuereinheiten 13 und 21 sind für die Steuerung der Energie- und der Datenübertragung des Übertragungssystems sowie zur Signalaufbereitung der übertragenen Daten verantwortlich. Die erste Steuereinheit 13 dient außerdem zur Speicherung einer elektronischen Identifikationsnummer. Im Anwendungsbeispiel ist eine bidirektionale Datenübertragung zwischen Schlüsselmodul 1 und Schloßmodul 2 vorgesehen. Die zweite Steuereinheit 21 sendet beim Versuch den Motor zu starten ein Signal zur Abfrage der Identifikationsnummer des Schlüsselmoduls 1 aus. Die erste Steuereinheit 13, die über die Induktionsspulen 10 und 20 mit Energie versorgt wird, decodiert dieses Signal und antwortet darauf, indem es die Identifikationsnummer über die Induktionsspulen 10 und 20 zur zweiten Steuereinheit 21 überträgt. Falls letztere diese Identifikationsnummer als Zugangsberechtigung anerkennt, wird daraufhin die Wegfahrsperre des Kraftfahrzeuges ausgeschaltet.

Ein derartiges Schließsystem eignet sich außerdem auch zur Sicherung von Räumen und, falls jede zugangsberechtigte Person ein eigenes Schlüsselmodul 1 mit einer eigenen Identifikationsnummer erhält, zur Identifikation der zugangsberechtigten Personen.

## Patentansprüche

1. Schließsystem mit einem Schlüsselmodul (1) und einem Schloßmodul (2), zwischen denen Daten- und Energieübertragung erfolgt, wobei
- das Schlüsselmodul (1) ein Schlüsselgehäuse (11) mit einem Schlüsselbart (12) aufweist, und im Schlüsselgehäuse (11) eine erste Induktionsspule (10) und eine mit der ersten Induktionsspule (10) verbundene erste Steuereinheit (13) angeordnet sind,
- das Schloßmodul (2) einen Schließzylinder (22), eine zweite Induktionsspule (20) und eine mit der zweiten Induktionsspule (20) verbundene zweite Steuereinheit (21) aufweist,
dadurch gekennzeichnet, daß
- die erste Induktionsspule (10) um den Schlüsselbart (12) des Schlüsselmoduls (1) gewickelt ist, und
- beim im Schloßmodul (2) steckenden Schlüsselmodul (1) die beiden Induktionsspulen (10, 20) in unmittelbarer Nähe zueinander liegen.

2. Schließsystem nach Anspruch 1, dadurch gekennzeichnet, daß die beiden Induktionsspulen (10, 20) etwa gleich groß ausgebildet sind.

3. Schließsystem nach einem der vorherigen Ansprüche, dadurch gekennzeichnet, daß in der ersten Steuereinheit (13) eine elektronische Identifikationsnummer gespeichert ist, die bei einer Bedienung des Schließsystems zur zweiten Steuereinheit (21) übertragbar ist.

4. Schließsystem nach einem der vorherigen Ansprüche, dadurch gekennzeichnet, daß eine bidirektionale Datenübertragung zwischen der ersten Steuereinheit (13) und der zweiten Steuereinheit (21) vorgesehen ist.

5. Verwendung eines Schließsystems nach einem der vorherigen Ansprüche zur Bedienung von Zündschlössern und elektronischen Wegfahrsperren in Kraftfahrzeugen.
